# EUROPEAN PATENT SPECIFICATION

(11) **EP 4 302 661 B1**
(45) Date of publication and mention of the grant of the patent: **09.09.2026**
(21) Application number: 23170677.1
(22) Date of filing: 28.04.2023
(51) Int. Cl.: A47J 37/06

(54) **A GRILL COMPRISING A GREASE GUIDE**
GRILL MIT EINER FETTFÜHRUNG
GRIL COMPRENANT UN GUIDE DE GRAISSE

(30) Priority: 28.06.2022 TR 202210662
(43) Date of publication of application: 10.01.2024
(73) Proprietor: Arçelik Anonim Sirketi, 34445 Istanbul (TR)
(72) Inventor: POLAT, EMRE, 34445 ISTANBUL (TR); DENIZER, FURKAN, 34445 ISTANBUL (TR); SEVEN, ONER, 34445 ISTANBUL (TR)

(56) References cited:
- EP-A1- 3 868 265
- CN-A- 108 095 572
- CN-U- 207 837 419
- CN-U- 212 326 184
- CN-U- 214 433 792
- KR-A- 20160 070 434
- US-A- 2 748 690
- US-A1- 2005 005 777
- US-A1- 2007 006 740
- US-B2- 10 561 275
- US-B2- 8 261 657

## Description

The present invention relates to a grill comprising a grease guide.

Electric grills have structures which can be opened and closed in various ways. The electric grills usually consist of two bodies which can rotate relative to each other between 0 degrees and 180 degrees. The cooking process is performed between the two bodies, sometimes by making the grill planar. User preferences vary according to the type of foodstuff cooked. The cooking process is performed by means of two plates which are heated by heaters. While operations such as toasting are carried out by closing two plates onto each other, the cooking of foodstuffs such as meat, fish, etc. is performed by means of a planar grill. It is desired that liquids such as grease, etc. which are formed during the cooking process are removed from the grill in a controlled manner. Thus, the cooking quality is increased and moreover, cleaning is facilitated. There are many state of the art methods for removing grease from the grill. The most common of these is the directing of grease to a certain region by means of the shape of the cooking plates. Removable collection trays are generally used in the region where grease is collected. Thus, said collection trays can be easily removed and cleaned. However, the inclined surfaces used on the cooking plates are not sufficient to remove the grease from the cooking area. The grease either does not drip or drips very slowly due to reasons such as the grease not being strong enough to flow with inclination and the grill legs being unstable. This causes the cooking plates to remain dirty, the grease to flow out uncontrollably and the cooking quality to decrease.

In the state of the art United States of America Patent Application No. US2006283334, a grill is disclosed, comprising an apparatus for removing the grease in a controlled manner.

In the state of the art United States of America Patent Application No. US2009320695 related to toaster grills and more particularly to a toaster grill that can safely assume a variety of cooking orientations and functions including a fully open grill orientation.

The aim of the present invention is the realization of a grill which provides ease of use and customer satisfaction. The grill realized in order to attain the aim of the present invention, explicated in the first claim and the respective claims thereof, comprises a first body and a second body which can be opened/closed onto each other; a first cooking plate which is provided on the first body; a second cooking plate which is provided on the second body; a heater which is disposed between the bodies and the cooking plates; and an opening which is arranged on the first cooking plate and/or the second cooking plate and which provides the discharge of the grease formed during the cooking process. The cooking process is performed on the cooking plates. The cooking plates can be closed onto each other or completely opened away from each other.

The grill of the present invention comprises one or more than one guiding pins which enable the grease at the opening to be guided. The guiding pins enable the grease droplets to be carried thanks to the adhesion formed thereon. Thus, the grease droplets are quickly removed from the cooking plate.

The guiding pin extends along a vertical plane perpendicular to the cooking plate such that the cooking plate remains at the center of the guiding pin. Thus, the grease droplets can be carried in the vertical plane. In an embodiment of the present invention, the grill comprises the guiding pins which are arranged at certain intervals along the opening. By arranging the guiding pins at certain intervals, the grease droplets are enabled to be guided over the opening.

In an embodiment of the present invention, the grill comprises the guiding pin of which the surface area opens at least partially to the outside via the opening. Thanks to the formation of adhesion force by wrapping around the guiding pins, the grease droplets are quickly discharged from the grill.

In an embodiment of the present invention, the grill comprises the guiding pins which are arranged along a plurality of rows. By means of the arrangement of the guiding pins in various rows, the grease droplets actively move away from the cooking plates.

In an embodiment of the present invention, the grill comprises a first cooking plate and/or a second cooking plate having a structure inclined towards the opening. Thus, the grease droplets are enabled to be guided towards the guiding pins.

In an embodiment of the present invention, the grill comprises a plurality of holes around the guiding pins. By means of the holes, the grease droplets move over the guiding pins so as to be directly moved away from the cooking plate.

In an embodiment of the present invention, the grill comprises a depression arranged at the part where the guiding pins are in contact with the cooking plate. By means of the depression, the grease droplets are collected on the guiding pins.

In an embodiment of the present invention, the grill comprises a collection tray provided under the guiding pins. The grease droplets flowing over the guiding pins are collected on the collection tray. The collection tray can be easily cleaned thanks to the detachable structure thereof.

By means of the present invention, a grill is realized, where the grease droplets are efficiently removed from the cooking area.

A grill realized in order to attain the aim of the present invention is illustrated in the attached figures, where:

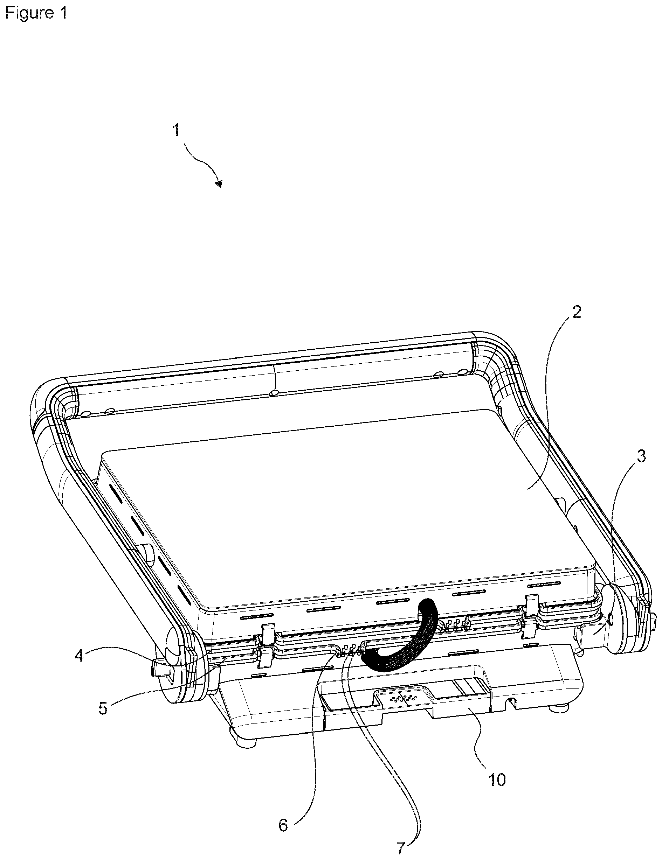

Figure 1 - is the perspective view of the grill.

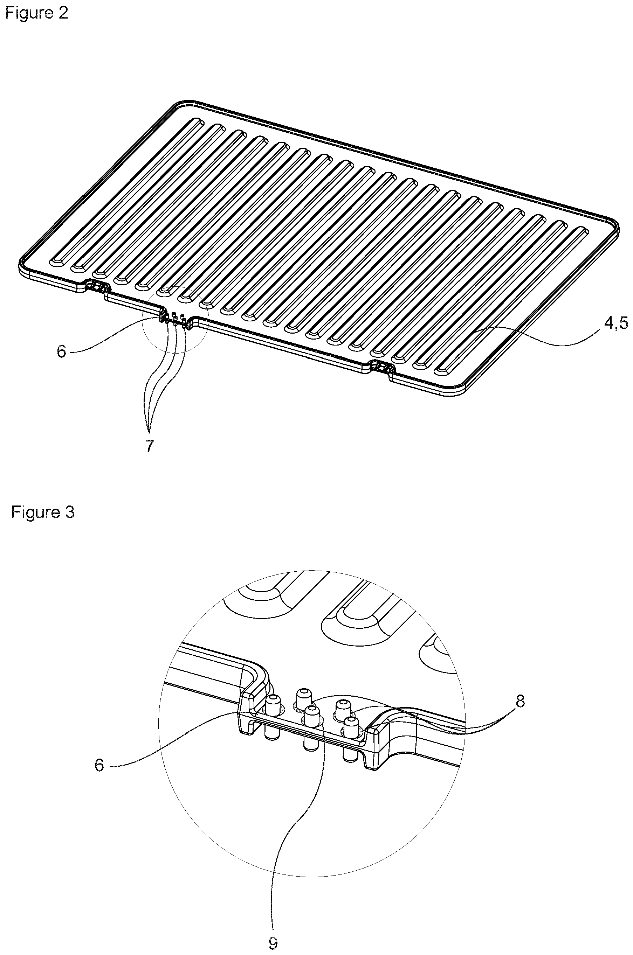

Figure 2 - is the perspective view of the cooking plate.
Figure 3 - is the perspective view of the opening and the guiding pins.

The elements illustrated in the figures are numbered as follows:
1- Grill
2- First body
3- Second body
4- First cooking plate
5- Second cooking plate
6- Opening
7- Guiding pin
8- Hole
9- Depression
10- Collection tray

The grill (1) comprises a first body (2) and a second body (3) which can be opened/closed with an angular movement with respect to each other; a first cooking plate (4) which is provided on the first body (2) and whereon the cooking process is performed; a second cooking plate (5) which is provided on the second body (3) and whereon the cooking process is performed; a heater which is provided between the bodies (2 and/or 3) and the cooking plates (4 and/or 5); and an opening (6) which is arranged on the first cooking plate (4) and/or the second cooking plate (5) and which provides the discharge of the grease droplets formed during the cooking process. The first body (2) and the second body (3) can move angularly between 0° and 180° with respect to each other. Thus, the cooking process can be performed between the two cooking plates (4 and 5) or on the cooking plates (4 or 5). By means of the opening (6), the grease droplets formed during the cooking process are removed from the cooking plates (4 and 5). Thus, more efficient cooking is provided and ease of use is provided in terms of hygiene.

The grill (1) of the present invention comprises one or more than one guiding pin (7) which enables the grease droplets at the opening (6) to be guided thereon. The grease droplets wrap around the guiding pins (7) thanks to the adhesion force and move along the guiding pins (7). Thus, the natural movement of the grease droplets is accelerated so as to move the same away from the cooking plate (4 and/or 5) faster.

The grill (1) comprises the guiding pin (7) which extends along a vertical plane perpendicular to the cooking plate (4 and/or 5) such that the cooking plate (4 and/or 5) remains at the center of the guiding pin (7). The guiding pin (7) has an almost equal length on both sides of the cooking plate (4 and/or 5). Thus, the guiding pin (7) enables the grease droplets to be guided even when both sides of the cooking plate (4 and/or 5) are used. Moreover, ease of use is provided.

In an embodiment of the present invention, the grill (1) comprises the guiding pins (7) which are arranged located at certain intervals along the opening (6). By arranging the guiding pins (7) at certain intervals, the grease droplets are enabled to be guided to the opening (6) so as to be discharged.

In an embodiment of the present invention, the grill (1) comprises the guiding pin (7) of which the surface area opens at least partially to the outside via the opening (6). By means of the partial opening of the surface area of the guiding pin (7) via the opening (6), the guiding pins (7) can be completely wrapped by the grease droplets. Thus, the adhesion force is increased and the grease droplets are quickly discharged.

In an embodiment of the present invention, the grill (1) comprises the guiding pins (7) which are arranged along a plurality of rows. By means of the arrangement of the guiding pins (7) along a plurality of rows, the gaps therebetween are also filled. Thus, the fluidity of the grease droplets is ensured while guidance is provided between the guiding pins (7).

In an embodiment of the present invention, the grill (1) comprises the first cooking plate (4) and/or a second cooking plate (5) having an inclined structure towards the opening (6) so as to enable the grease droplets to be guided towards the guiding pins (7). By means of the inclined structure of the cooking plate (4 and/or 5), the grease droplets are enabled to be guided towards the opening (6). Thus, while the cooking quality is increased, the grease droplets are prevented from accumulating on the cooking plate (4 and/or 5).

In an embodiment of the present invention, the grill (1) comprises a plurality of holes (8) around the guiding pins (7). By means of the holes (8) around the guiding pins (7), the grease droplets wrap around the guiding pins (7) so as to vertically move along the guiding pins (7).

In an embodiment of the present invention, the grill (1) comprises a depression (9) which is arranged at the part where the guiding pins (7) are in contact with the cooking plate (4 and/or 5) and which guides the grease droplets towards the guiding pins (7). By means of the depressions (9) formed on the cooking plate (4 and/or 5), the grease droplets are collected around the guiding pins (7). Thus, the grease droplets can be intensively and quickly discharged.

In an embodiment of the present invention, the grill (1) comprises a removable collection tray (10) which is disposed under the guiding pins (7) and wherein the grease droplets are collected. The grease droplets flowing over the guiding pins (7) are collected on the collection tray (10). The grease collection tray (10) can be attached to/detached from the body (2 and/or 3). Thus, the collected grease droplets can be easily removed and cleaned by the user.

By means of the present invention, a grill (1) is realized, comprising the guiding pins (7) which enable the grease droplets to be easily removed from the cooking plates (4 and/or 5). By means of the guiding pins (7), the adhesion force of the grease droplets is utilized such that the grease droplets are much more quickly removed from the cooking plates (4 and/or 5) in a controlled manner. Thus, cooking quality and user satisfaction are improved.

## Claims

1. A grill (1) **comprising** a first body (2) and a second body (3) which can be opened/closed with an angular movement with respect to each other; a first cooking plate (4) which is provided on the first body (2) and whereon the cooking process is performed; a second cooking plate (5) which is provided on the second body (3) and whereon the cooking process is performed; a heater which is provided between the bodies (2 or 3) and the cooking plates (4 or 5); an opening (6) which is arranged on the first cooking plate (4) and/or the second cooking plate (5) and which provides the discharge of the grease droplets formed during the cooking process, **characterized by** one or more than one guiding pin (7) which enables the grease droplets at the opening (6) to be guided thereon and which extends along a vertical plane perpendicular to the cooking plate (4 and/or 5) such that the cooking plate (4 and/or 5) remains at the center of the one or more than one guiding pin (7) such that the one or more than one guiding pin (7) has an almost equal length on both sides of the cooking plate (4 and/or 5) .

2. A grill (1) as in claim 1,
**characterized by** the one or more than one guiding pin (7) which is arranged at certain intervals along the opening (6).

3. A grill (1) as in any one of the above claims, **characterized by** the one or more than one guiding pin (7) of which the surface area opens at least partially to the outside via the opening (6), such that the one or more than one guiding pin (7) can be completely wrapped by the grease droplets.

4. A grill (1) as in any one of the above claims, **characterized by** the one or more than one guiding pin (7) which is arranged along a plurality of rows.

5. A grill (1) as in any one of the above claims, **characterized by** the first cooking plate (4) and/or a second cooking plate (5) having an inclined structure towards the opening (6) so as to enable the grease droplets to be guided towards the one or more than one guiding pin (7).

6. A grill (1) as in any one of the above claims, **characterized by** a plurality of holes (8) which are arranged around the one or more than one guiding pin (7).

7. A grill (1) as in any one of the above claims, **characterized by** a depression (9) which is arranged at the part where the one or more than one guiding pin (7) are in contact with the cooking plate (4 and/or 5) and which guides the grease droplets towards the one or more than one guiding pin (7).

8. A grill (1) as in any one of the above claims, **characterized by** a removable collection tray (10) which is disposed under the one or more than one guiding pin (7) and wherein the grease droplets are collected.

## Patentansprüche

1. Ein Grill (1), **umfasst** einen ersten Körper (2) und einen zweiten Körper (3), die durch eine Winkelbewegung relativ zueinander geöffnet bzw. geschlossen werden können; eine erste Kochplatte (4), die am ersten Körper (2) vorgesehen ist und auf der der Garvorgang stattfindet; eine zweite Kochplatte (5), die am zweiten Körper (3) vorgesehen ist und auf der der Garvorgang stattfindet; eine Heizvorrichtung, die zwischen den Körpern (2 oder 3) und den Kochplatten (4 oder 5) vorgesehen ist; eine Öffnung (6), die an der ersten Kochplatte (4) und/oder der zweiten Kochplatte (5) angeordnet ist und den Abfluss der während des Garvorgangs entstehenden Fetttröpfchen ermöglicht, **gekennzeichnet ist er dadurch**, dass ein oder mehrere Führungsstifte (7), die es ermöglichen, die Fetttröpfchen an der Öffnung (6) darauf zu führen, und die sich entlang einer vertikalen Ebene senkrecht zur Kochplatte (4 und/oder 5) erstrecken, so dass die Kochplatte (4 und/oder 5) in der Mitte des einen oder der mehreren Führungsstifte (7) verbleibt, sodass der eine oder die mehreren Führungsstifte (7) auf beiden Seiten der Kochplatte (4 und/oder 5) eine nahezu gleiche Länge aufweisen.

2. Ein Grill (1), wie in Anspruch 1 aufgeführt, **ist dadurch gekennzeichnet, dass** ein oder mehrere Führungsstifte (7) in bestimmten Abständen entlang der Öffnung (6) angeordnet sind.

3. Ein Grill (1), wie in einem der vorherigen Ansprüchen aufgeführt, **ist dadurch gekennzeichnet, dass** ein oder mehrere Führungsstifte (7), deren Oberfläche sich zumindest teilweise über die Öffnung (6) nach außen hin öffnet, so dass der eine oder die mehreren Führungsstifte (7) vollständig von den Fetttröpfchen umhüllt werden können.

4. Ein Grill (1), wie in einem der vorherigen Ansprüchen aufgeführt, **ist dadurch gekennzeichnet, dass** ein oder mehrere Führungsstifte (7) entlang mehrerer Reihen angeordnet sind.

5. Ein Grill (1), wie in einem der vorherigen Ansprüchen aufgeführt, **ist dadurch gekennzeichnet, dass** die erste Kochplatte (4) und/oder eine zweite Kochplatte (5) eine zur Öffnung (6) hin geneigte Struktur aufweist, damit die Fetttröpfchen zu dem einen oder den mehreren Führungsstiften (7) geleitet werden können.

6. Ein Grill (1), wie in einem der vorherigen Ansprüchen aufgeführt, **ist dadurch gekennzeichnet, dass** eine Vielzahl von Löchern (8) um den einen oder die mehreren Führungsstifte (7) herum angeordnet ist.

7. Ein Grill (1), wie in einem der vorherigen Ansprüchen aufgeführt, **ist dadurch gekennzeichnet, dass** eine Vertiefung (9) vorgesehen ist, die an der Stelle angeordnet ist, an der der eine oder die mehreren Führungsstifte (7) mit der Kochplatte (4 und/oder 5) in Kontakt stehen, und die die Fetttröpfchen zu dem einen oder den mehreren Führungsstiften (7) leitet.

8. Ein Grill (1), wie in einem der vorherigen Ansprüchen aufgeführt, **ist dadurch gekennzeichnet, dass** eine herausnehmbare Auffangschale (10) unter dem einen oder den mehreren Führungsstiften (7) angeordnet ist, in der die Fetttröpfchen aufgefangen werden.

## Revendications

1. Gril (1) **comprenant** un premier corps (2) et un second corps (3) pouvant être ouverts/fermés par un mouvement angulaire l'un par rapport à l'autre ; une première plaque de cuisson (4) disposée sur le premier corps (2) et sur laquelle est réalisé le processus de cuisson ; une seconde plaque de cuisson (5) disposée sur le second corps (3) et sur laquelle est réalisé le processus de cuisson ; un élément chauffant disposé entre les corps (2 ou 3) et les plaques de cuisson (4 ou 5) ; une ouverture (6) aménagée dans la première plaque de cuisson (4) et/ou la seconde plaque de cuisson (5) et permettant l'évacuation des gouttelettes de graisse formées pendant le processus de cuisson, **caractérisé par** une ou plusieurs broches de guidage (7) permettant de guider les gouttelettes de graisse au niveau de l'ouverture (6) et s'étendant selon un plan vertical perpendiculaire à la plaque de cuisson (4 et/ou 5), de sorte que la plaque de cuisson (4 et/ou 5) demeure au centre de la ou des broches de guidage (7), la ou les broches de guidage (7) présentant une longueur sensiblement égale de part et d'autre de la plaque de cuisson (4 et/ou 5).

2. Gril (1) selon la revendication 1, **caractérisé par** la ou les broches de guidage (7) disposées à intervalles déterminés le long de l'ouverture (6).

3. Gril (1) selon l'une quelconque des revendications précédentes, **caractérisé par** la ou les broches de guidage (7), dont la surface s'ouvre au moins partiellement vers l'extérieur par l'intermédiaire de l'ouverture (6), de sorte que la ou les broches de guidage (7) puissent être entièrement entourées par les gouttelettes de graisse.

4. Gril (1) selon l'une quelconque des revendications précédentes, **caractérisé par** la ou les broches de guidage (7) disposées selon une pluralité de rangées.

5. Gril (1) selon l'une quelconque des revendications précédentes, **caractérisé par** la première plaque de cuisson (4) et/ou la seconde plaque de cuisson (5) présentant une structure inclinée vers l'ouverture (6), de manière à guider les gouttelettes de graisse vers la ou les broches de guidage (7).

6. Gril (1) selon l'une quelconque des revendications précédentes, **caractérisé par** une pluralité de trous (8) disposés autour de la ou des broches de guidage (7).

7. Gril (1) selon l'une quelconque des revendications précédentes, **caractérisé par** un évidement (9) aménagé à l'endroit où la ou les broches de guidage (7) sont en contact avec la plaque de cuisson (4 et/ou 5), ledit évidement guidant les gouttelettes de graisse vers la ou les broches de guidage (7).

8. Gril (1) selon l'une quelconque des revendications précédentes, **caractérisé par** un bac de récupération amovible (10) disposé sous la ou les broches de guidage (7) et dans lequel sont recueillies les gouttelettes de graisse.
